# EUROPEAN PATENT APPLICATION

(11) **EP 4 682 784 A1**
(43) Date of publication of application: **21.01.2026**
(21) Application number: 25783917.5
(22) Date of filing: 16.05.2025
(51) Int. Cl.: G06N 20/20, G06N 5/04

(54) **METHOD FOR PROVIDING LLM-BASED AI AGENT TO WHICH ARTIFICIAL INTELLIGENCE MODEL INCLUDING PLURALITY OF MODELS IS APPLIED, AND SYSTEM THEREFOR**

(30) Priority: 17.05.2024 KR 20240064556
(71) Applicant: LG Management Development Institute Co., Ltd., Seoul 07336 (KR)
(72) Inventor: CHOI, Ye Muk, Seoul 07074 (KR)
(74) Representative: BCKIP Part mbB
(86) International application number: PCT/KR2025/006679
(87) International publication number: WO 2025/239713

(57) **Abstract**

A method for providing an AI agent based on an LLM applying an artificial intelligence model including a plurality of models according to an embodiment of the present invention pertains to a method for a computing system including a memory and a processor to provide an AI agent based on an LLM applying an artificial intelligence model including a plurality of models, wherein the method includes: executing an on-device AI agent service; acquiring predetermined input data based on the executed on-device AI agent service; determining a domain according to the acquired input data; deciding an application model, which is an artificial intelligence model that will process a task according to the determined domain; generating output data for the input data based on the decided application model; and providing the generated output data based on the on-device AI agent service.

## Description

### [Technical Field]

The present invention relates to a method and system for providing an AI agent based on an LLM applying an artificial intelligence model including a plurality of models. More specifically, the present invention relates to a method and system for providing an on-device specialized artificial Intelligence (AI) agent that decides an application model optimized for a domain according to the external environment based on a large language model (LLM) that applies mixture of experts (MoE) and performs output based on the decided application model.

### [Background Art]

In general, artificial intelligence (AI) is implemented through multiple AI models and deep learning based thereon.

This AI is being developed to provide a variety of services in consideration of the user's context (for example, context, environment and/or intents).

However, when specific tasks are intended to be processed based on large amounts of data, computing cost or time required for processing those tasks are considerable.

As a result, in recent years, there has also been a limitation of the use of the AI model in an on-device environment.

In order to address this limitation, model architecture such as mixture of experts (MoE) is utilized in the related art.

Herein, the MoE may refer to architecture of a machine learning model which addresses complex issues by combining multiple expert models.

The MoE may include expert models, which are several small network designed to learn different portions and/or different features of predetermined data, and perform resulting data processing operation, and a gating network which evaluates the performance of each expert model, and decides which expert model is most suitable for a specific task according to predetermined data.

Accordingly, according to the MoE architecture, the gating network which acquires predetermined input data decides probabilistic or decisive task allocation for each expert model, and selected expert models perform individual tasks, and return results thereof to perform data processing for a specific task.

As such an MOE is utilized, the AI model concentrates a calculation resource by activating only a specific portion when a complicated task or a large quantity of datasets in order to improve overall efficiency and performance.

However, in the case of the MoE in the related art, a high-level video random access memory (VRAM) is required, and a subject matter to be addressed in a fine tuning process is also considerable.

In addition, the MoE method in the related art is to efficiently manage a large size model, and may be limited in supporting the efficiency of the rest of the resources that are not activated according to the given task.

In addition, in the technical field in the related art, a service may be provided by using the AI model implemented mostly, and it may be difficult to quickly and easily secure the AI analysis performance that is most suitable for a given context.

### [Disclosure]

### [Technical Problem]

An embodiment of the present invention has been devised to obviate the above limitations. An aspect of the present invention is directed to implementing a method and system for providing an on-device specialized artificial Intelligence (AI) agent that decides an application model optimized for a domain according to the external environment based on a large language model (LLM) that applies mixture of experts (MoE) and performs output based on the decided application model.

Technical aspects to be achieved by the present invention and embodiments according to the present invention are not limited to the technical aspects described above, and other technical aspects may also be addressed.

### [Technical Solution]

A method for providing an AI agent based on an LLM applying an artificial intelligence model including a plurality of models according to an embodiment of the present invention pertains to a method for a computing system including a memory and a processor to provide an AI agent based on an LLM applying an artificial intelligence model including a plurality of models, wherein the method includes: executing an on-device AI agent service; acquiring predetermined input data based on the executed on-device AI agent service; determining a domain according to the acquired input data; deciding an application model, which is an artificial intelligence model that will process a task according to the determined domain; generating output data for the input data based on the decided application model; and providing the generated output data based on the on-device AI agent service.

In another aspect, the input data specifies the task according to the domain in the form of at least one of predetermined text, voice, image, video, or sensing data.

In another aspect, the domain specifies at least one feature of data, a rule, a terminology, a problem definition, or a process for a predetermined task.

In another aspect, the decision of the application model includes deciding at least one application model based on a master model that controls the operation of an on-device AI agent service system.

In another aspect, the master model includes at least one of a router (gating network), which is an artificial intelligence module that performs task allocation for each artificial intelligence model included in the on-device AI agent service system based on the decided domain, or an orchestrator, which is an artificial intelligence module that controls the router.

In another aspect, the decision of the application model further includes deciding the application model based on a secondary model, which is an artificial intelligence module that performs a predetermined task under the control of the master model.

In another aspect, the secondary model includes at least one of a small large language model (sLLM), normal mixture of experts (MoE) model, external model, or specialized model (SM).

In another aspect, the sLLM includes an MoELM, which is a model based on an MoE architecture, constructed by combining the specialized model, which is an independently pre-trained artificial intelligence model, and the router, which is an artificial intelligence module that controls a model task.

In another aspect, the specialized model includes an specialized module model, which is an independently modularized specialized model, matched with specialized model feature information acquired based on predetermined MoE architecture-based learning.

In another aspect, the sLLM includes a DMoE model, which is a model based on an MoE architecture, constructed by combining the specialized module model and the router.

In another aspect, the decision of the application model further includes detecting the secondary model optimized for task processing according to the domain based on the master model, and deciding the detected secondary model as the application model.

A system for providing an AI agent based on an LLM applying an artificial intelligence model including a plurality of models according to an embodiment of the present invention includes: at least one memory; and at least one processor for reading out at least one application stored in the memory and providing the AI agent based on the LLM applying the artificial intelligence model including the plurality of models, wherein instructions of the processor include instructions for: executing an on-device AI agent service; acquiring predetermined input data based on the executed on-device AI agent service; determining a domain according to the acquired input data; deciding an application model, which is an artificial intelligence model that will process a task according to the determined domain; generating output data for the input data based on the decided application model; and providing the generated output data based on the on-device AI agent service.

### [Advantageous Effects]

A method and system for providing an AI agent based on an LLM applying an artificial intelligence model including a plurality of models according to an embodiment of the present invention can effectively decide a model optimized for data processing according to a given domain even in an on-device environment based on an AI agent model including models implemented by applying an MoE architecture according to an embodiment of the present invention, and provide an output according to efficient data processing through the decided model.

Thus, the method and system for providing the AI agent based on the LLM applying the artificial intelligence model including the plurality of models according to an embodiment of the present invention can implement and provide the artificial intelligence model that better understands, better executes, and well answers a given task even in any environment, and can significantly improve qualities and performances of various services based thereon (for example, smart phone's voice assistant services, smart camera services, fitness tracker and smartwatch services, autonomous driving services, and/or home security services).

The effects of the present invention are not limited to those mentioned above, and other effects not mentioned may be clearly understood by those skilled in the art from the following description.

### [Description of Drawings]

FIG. 1 illustrates an example block diagram of a computing system implementing an MoE architecture-based model provision service according to an embodiment of the present invention.
FIG. 2 illustrates an example block diagram of a computing device implementing an MoE architecture-based model provision service according to an embodiment of the present invention.
FIG. 3 illustrates an example block diagram of another aspect of a computing device implementing an MoE architecture-based model provision service according to an embodiment of the present invention.
FIG. 4 illustrates an internal block diagram of an AI agent model according to an embodiment of the present invention.
FIG. 5 illustrates a flow diagram of an MoE model providing method according to an embodiment of the present invention.
FIG. 6 illustrates a conceptual diagram of an MoE model providing method according to an embodiment of the present invention.
FIG. 7 illustrates a flow diagram of a model specifying method based on an MoE according to an embodiment of the present invention.
FIG. 8 illustrates a conceptual diagram of a model specifying method based on an MoE according to an embodiment of the present invention.
FIG. 9 illustrates an example of specialized model feature information according to an embodiment of the present invention.
FIG. 10 illustrates a flow diagram of a method for providing an AI agent based on an LLM applying an MoE according to an embodiment of the present invention.
FIG. 11 illustrates a conceptual diagram of a method for providing an AI agent based on an LLM applying an MoE according to an embodiment of the present invention.

### [Mode for Invention]

Embodiments can impose various transformations that can have various embodiments, and specific embodiments illustrated in the drawings will be described in detail in the detailed description. The advantages, features and methods for achieving the same will become apparent from the following description of the embodiments given in conjunction with the accompanying drawings. However, the present invention is not limited to the embodiments described herein but may be embodied in many different forms. It will be understood that, although the terms "first" or "second" may be used herein to distinguish one component from another component, these components should not be limited by these terms. In addition, a singular expression includes a plural expression, unless the context clearly states otherwise. In addition, it should be understood that the terms such as "include" or "have" are merely intended to indicate that features, or components described in the specification are present, and are not intended to exclude the possibility that one or more other features, or components will be added. In addition, components in the drawings may be exaggerated or shrunk for the convenience of descriptions. For example, since the size and thickness of each element in the drawings has been arbitrarily modified for the convenience of descriptions, it should be noted that the present invention is not necessarily limited to what has been shown in the drawings.

Hereinafter, embodiments of the present invention will be described in detail with reference to appended drawings. Throughout the specification, the same or corresponding component is assigned the same reference numeral, and repeated descriptions thereof will be omitted.

### [Exemplary System Implementing MoE Architecture-Based Model Provision Service]

Hereinafter, an exemplary system for implementing a model provision service based on an MoE architecture that decides an application model optimized for a domain according to an external environment based on a large language model (LLM) applying a mixture of experts (MoE) and provides an on-device specialized artificial intelligence (AI) agent that performs an output based on the decided application model will be described in detail with reference to the accompanying drawings.

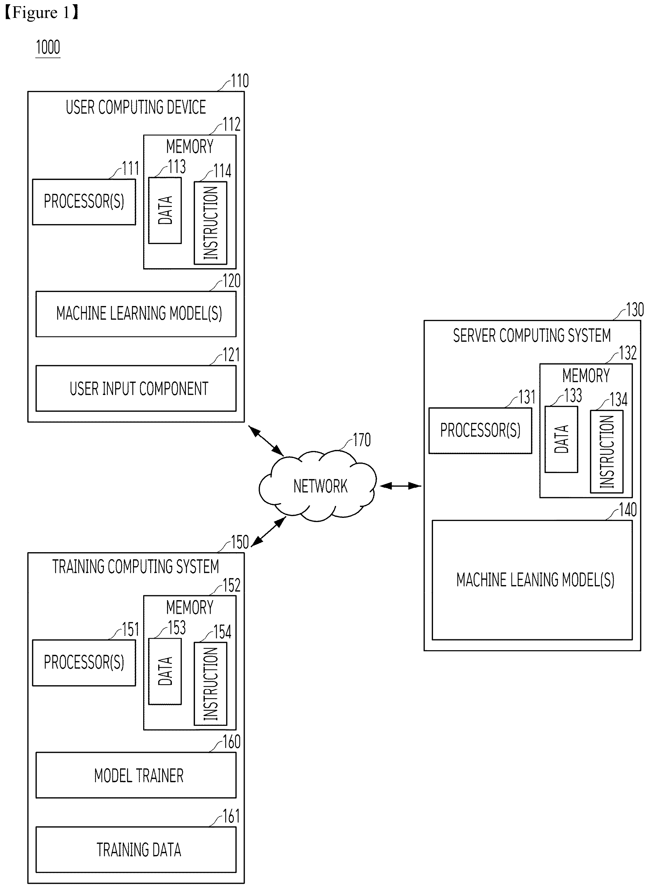

FIG. 1 illustrates an example block diagram of a computing system implementing an MoE architecture-based model provision service according to an embodiment of the present invention.

Referring to FIG. 1, a computing system 1000 which implements the MoE architecture-based model provision service of an embodiment of the present invention includes a user computing device 110, a server computing system 130, and a training computing system 150, and any other devices which are configured to communicate through a network 170.

The MoE architecture-based model provision service according to an embodiment of the present invention that decides the application model optimized for the domain according to the external environment based on the LLM applying the MoE and provides the on-device specialized AI agent that performs the output based on the decided application model may 1) be implemented and provided locally by the user computing device 110, 2) implemented and provided in the form of a web service by the server computing system 130 which communicates with the user computing device 110, and 3) implemented and provided by mutual association of the user computing device 110 and the server computing system 130.

In this connection, in an embodiment, the user computing device 110 and/or the server computing system 130 may train a machine learning model 120 and/or 140 through interaction with the training computing system 150 communicationally connected through the network 170. The training computing system 150 may be a system separated from the server computing system 130 or may be a portion of the server computing system 130.

In addition, in this connection, the artificial intelligence model may be 1) directly trained locally by the user computing device 110, 2) trained while the server computing system 130 and the user computing device 110 interact with each other through the network 170, and 3) trained by using various training techniques and learning techniques by the separate training computing system 150. In addition, the method may also be implemented by a method in which the artificial intelligence model trained by the training computing system 150 is transmitted to the user computing device 110 and/or the server computing system 130 through the network 170, and is provided and updated.

In some embodiments, the training computing system 150 may be a portion of the server computing system 130 or a portion of the user computing device 110.

The user computing device 110 may include various types of computing devices such as a smart phone, a cellular phone, a digital broadcasting device, personal digital assistants (PDA), a portable multimedia player (PMP), a desktop, a wearable device, an embedded computing device, and/or a tablet PC.

The user computing device 110 includes at least one processor 111 and a memory 112. Herein, the processor 110 may be configured of at least one or a plurality of processors electrically connected among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions.

The memory 112 may include one or more non-transitory/transitory computer-readable storage media, such as RAM, ROM, EEPROM, EPROM, flash memory devices, or magnetic disks, and combinations thereof, and may include web storage of servers performing storage functions of the memory on the Internet. The memory 112 may store data 113 and instructions 114 necessary for the at least one processor 111 to perform a functional operation, such as training the artificial intelligence model or executing the MoE architecture-based model provision service through the artificial intelligence model.

In an embodiment, the user computing device 110 may store at least one machine learning model 120.

Specifically, the user computing device 110 may be various machine learning models such as a plurality of neural networks (for example, deep neural networks) or other types of machine learning models, including non-linear models and/or linear models, and may be configured of a combination thereof.

In this connection, the neural network may include at least one of feed-forward neural networks, recurrent neural networks (for example, long short-term memory recurrent neural networks), convolutional neural networks and/or other forms of neural networks.

In an embodiment, the user computing device 110 may receive at least one machine learning model 120 from the server computing system 130 via the network 170, store the same in the memory 112, and then execute the stored machine learning model 120 by the processor 111 to perform the MoE architecture-based model provision service.

In another embodiment, the server computing system 130 may include at least one machine learning model 140 and perform operations through the machine learning model 140, and may provide the MoE architecture-based model provision service to a user by linking with the user computing device 110 in a manner of communicating data related thereto with the user computing device 110.

For example, the user computing device 110 may perform the MoE architecture-based model provision service by providing an output for the input of a user using the machine learning model 140 through the server computing system 130 via the web.

In addition, the artificial intelligence model may also be implemented in such a way that at least some of the machine learning models 120 and/or 140 are executed on the user computing device 110 and the rest are executed on the server computing system 130.

In addition, the user computing device 110 may include at least one input component 121 that detects user input. For example, the user input component 121 may include a touch sensor (for example, a touch screen and/or a touch pad) that detects touch of an input medium of a user (for example, a finger or a stylus), an image sensor that detects a motion input of a user, a microphone, a button, a mouse and/or a keyboard that detects user voice input. In addition, the user input component 121 may include an interface and an external controller when receiving input from an external controller (for example, a mouse or a keyboard) through the interface.

The server computing system 130 includes at least one processor 131 and a memory 132. Herein, the processor 131 may be configured of at least one or a plurality of processors electrically connected among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions.

In addition, the memory 132 may include one or more non-transitory/transitory computer-readable storage media, such as RAM, ROM, EEPROM, EPROM, flash memory devices, or magnetic disks, and combinations thereof. The memory 132 may store data 133 and instructions 134 required for the processors 131 to perform a functional operation such as the train of the artificial intelligence model or the execution of the MoE architecture-based model provision service through the artificial intelligence model.

In an embodiment, the server computing system 130 may be implemented to include one or more computing devices or computers. For example, the server computing system 130 may be implemented so that a plurality of computing devices operate according to sequential computing architecture, parallel computing architecture, or a combination thereof. Further, the server computing system 130 may include a plurality of computing devices connected through the network 170.

Further, the server computing device 130 may store one or more machine learning models 140. For example, the server computing system 130 may include a neural network and/or multilayer non-linear model as the machine learning model 140. An exemplary neural network may include a feed-forward neural network, a deep neural network, a recurrent neural network, and a convolution neural network.

The training computing system 150 includes at least one processor 151 and a memory 152. Herein, the processor 151 may be configured of at least one or a plurality of processors electrically connected among the CPU, the GPU, the ASICs, the DSPs, the DSPDs, the PLDs, the FPGAs, controllers, micro-controllers, microprocessors, and/or other electrical units for performing functions.

In addition, the memory 152 may include one or more non-transitory/transitory computer-readable storage media, such as RAM, ROM, EEPROM, EPROM, flash memory devices, or magnetic disks, and combinations thereof, and may include web storage of servers performing storage functions of the memory on the Internet. The memory 152 may store data 153 and instructions 154 necessary for the processor 151 to perform training of the artificial intelligence model.

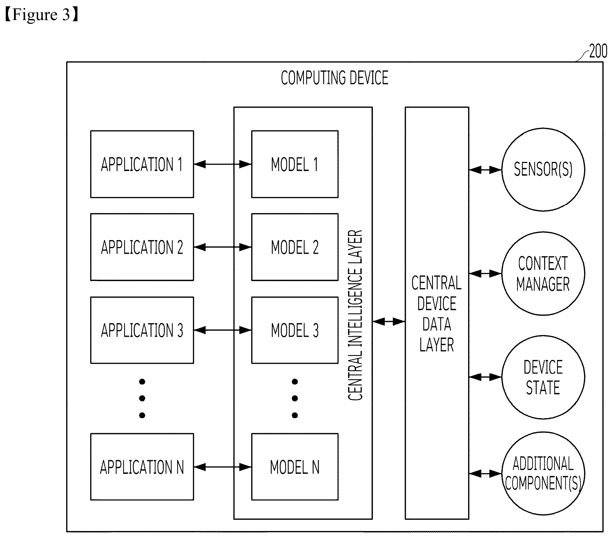

For example, the training computing system 150 may include a model trainer 160 configured to train the machine learning models 120 and/or 140 stored in the user computing device 110 and/or the server computing system 130 by using various training or learning techniques such as backpropagation of an error (according to the framework illustrated in FIG. 3).

For example, the model trainer 160 may perform updating one or more parameters of the machine learning models 120 and/or 140 based on a defined loss function by a backpropagation scheme.

In some implementation examples, the performance of the backpropagation of the error may include performing truncated backpropagation through time. The model trainer 160 may perform multiple generalization techniques (for example, weight reduction, drop-out, and/or knowledge distillation) in order to enhance a generalization capability of the trained machine learning models 120 and/or 140.

In particular, the model trainer 160 may train the machine learning models 120 and/or 140 based on a series of training data 161. Herein, the training data 161 may include, for example, different formats of data such as an image, an audio, and/or text. Examples of image type data which may be used may include a video frame, LiDAR point cloud, an X-ray image, a computer tomography scan, a hyperspectral image, and/or various other types of images.

The training data 161 may be provided by the user computing device 110 and/or the server computing system 130. When the training computing device 150 trains the machine learning models 120 and/or 140 with respect to specific data of the user computing device 110, the machine learning models 120 and/or 140 may be characterized as a personalized model.

In addition, the model trainer 160 includes a computer logic utilized to provide a desired function.

Further, the model trainer 160 may be implemented as hardware, firmware, and/or software controlling a universal processor. In one implementation example, the model trainer 160 may include a program file stored in a storage device, and may be loaded to the memory 152 and executed by one or more processors 151. In another implementation example, the model trainer 160 includes one or more sets of computer-executable data 153 and instructions 154 stored in executable by a tangible computer-readable storage medium such as a RAM hard disk or an optical or magnetic medium.

The network 170 includes a 3rd Generation Partnership Project (3GPP) network, a Long Term Evolution (LTE) network, a World Interoperability for Microwave Access (WIMAX) network, Internet, a Local Area Network (LAN), Wireless Local Area Network (LAN), a Wide Area Network (WAN), a Personal Area Network (PAN), a Bluetooth network, a satellite broadcasting network, an analog broadcasting network, and/or a Digital Multimedia Broadcasting (DMB) network, but is not limited thereto.

In general, communication through the network 170 may be performed through various communication protocols (for example, TCP/IP, HTTP, SMTP, and/or FTP), encoding or formats (for example, HTML and/or XML), and/or protective schemas (for example, VPN, secure HTTP, and/or SSL) by using any type of wired and/or wireless communication.

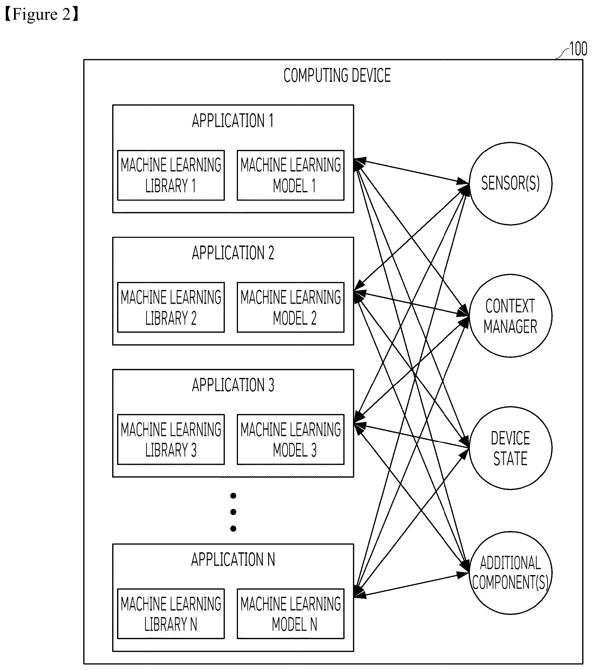

FIG. 2 illustrates an example block diagram of a computing device implementing an MoE architecture-based model provision service according to an embodiment of the present invention.

Referring to FIG. 2, the computing device 100 included in the user computing device 110, the server computing system 130, and the training computing system 150 includes a plurality of applications (for example, application 1 to application N). Each application may include a machine learning library and at least one machine learning model. For example, the applications may include an image processing (for example, detection, classification and/or segmentation) application, a text messaging application, an e-mail application, a dictation application, a virtual keyboard application, a browser application, and a chat-bot application.

In an embodiment, the computing device 100 may include the model trainer 160 for training the artificial intelligence model, and may store and operate the trained artificial intelligence model to provide output data according to predetermined input data (in an embodiment, text, voice, image, moving picture, and/or specific sensor based sensing data).

Each application of the computing device 100 may communicate with a number of other components of the computing device, such as, for example, one or more sensors, a context manager, a device state component, and/or additional components. In an embodiment, each application may communicate with each device component using an API (for example, a public API). In an embodiment, the API used by each application may be specific to the relevant application.

FIG. 3 illustrates an example block diagram of another aspect of a computing device implementing an MoE architecture-based model provision service according to an embodiment of the present invention.

Referring to FIG. 3, a computing device 200 includes a plurality of applications (for example, application 1 to application N). Each application is in communication with a central intelligence layer. For example, the applications may include an image processing application, a text messaging application, an e-mail application, a dictation application, a virtual keyboard application, and a browser application. In an embodiment, each application may communicate with the central intelligence layer (and model(s) stored therein) using an API (for example, a common API across all applications).

In addition, the central intelligence layer may include a plurality of machine learning models. For example, as illustrated in FIG. 3, a respective machine learning model and at least some thereof may be provided for each application and managed by the central intelligence layer. In other implementations, two or more applications may share a single machine learning model. For example, in some implementations, the central intelligence layer may provide a single model for all of the applications. In some implementations, the central intelligence layer may be included within an operating system of the computing device 200 or implemented differently.

The central intelligence layer may communicate with a central device data layer. The central device data layer may be a centralized data storage for the computing device 200. As illustrated in FIG. 3, the central device data layer may communicate with a number of other components of the computing device 200, such as, for example, one or more sensors, a context manager, a device state component, and/or additional components. In some implementations, the central device data layer may communicate with each device component using an API (for example, a private API).

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein may be implemented using a single device or component or a plurality of devices or components working in combination. Databases and applications may be implemented on a single system or distributed across a plurality of systems. Distributed components may operate sequentially or in parallel.

### [AI Agent Specialization Model (AIAM)]

In another aspect, the computing system 1000 may include an AI agent specialization model (AIAM) according to an embodiment of the present invention.

Herein, the AIAM according to an embodiment is an AI agent model to which the MoE architecture implemented according to an embodiment of the present invention is applied, and may be an artificial intelligence model including a data processing algorithm which may autonomously act in a specific environment, solve a task, and achieve a goal.

Such an AIAM may include a data processing algorithm for implementing a cognitive ability of collecting and interpreting data from a given environment, a decision mechanism of deciding an optimal action based on the collected data, an execution ability of executing the decided action, and a learning ability of improving the action through experience.

As an embodiment, the AIAM may acquire predetermined input data (for example, text, voice, image, moving picture, and/or specific sensor based sensing data), and output data (for example, response data to a specific query and/or a control signal according to a specific instruction) by performing a predetermined task based on the acquired input data.

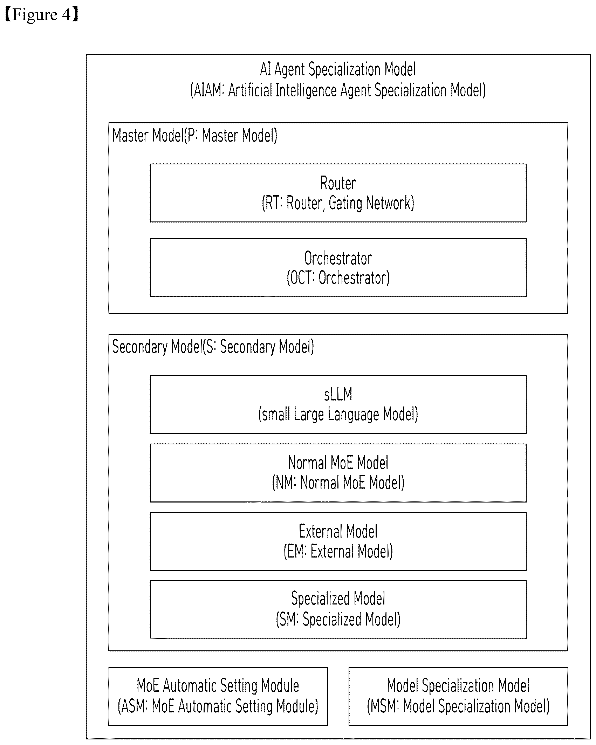

FIG. 4 illustrates an internal block diagram of an AI agent model according to an embodiment of the present invention.

Specifically, referring to FIG. 4, the AI agent model according to an embodiment may include one or more of a router (RT, gating network), orchestrator (OCT), small large language model (sLLM), normal MoE model (NM), external model (EM), and/or specialized model (SM).

In this connection, in FIG. 4, the AI agent model includes the components described above in order to prevent a feature according to an embodiment of the present invention from being blurred.

However, depending on embodiments, those skilled in the art may appreciate that other universal components other than the components illustrated in FIG. 4 may be further included or some components illustrated in FIG. 4 may be omitted.

In more detail, the RT (gating network) according to an embodiment of the present invention may be an artificial intelligence module that performs task allocation and/or traffic adjustment for a plurality of models in the MoE architecture.

Specifically, the RT may analyze given input data and/or request task to decide which model is most appropriate to the corresponding data processing.

In this connection, in an embodiment, the RT may decide a model optimized to the processing of given data based on the performance, specialty, and/or previous experience of each model.

Further, the RT may distribute the given task to one or more models by considering a system load to support efficient data processing.

Moreover, the RT may adjust a task allocated to a specific model by flexibly responding to real-time system change.

In an embodiment, the RT may be an artificial intelligence module configured to selectively decide a model (hereinafter, referred to as a domain-specific specialized model) which executes a data processing operation optimized to a predetermined domain.

In other words, in an embodiment, the RT may be an artificial intelligence model which selects a model (in other words, a domain-specific specialized model) that is determined to perform data processing (in an embodiment, deep learning) most suitable for a given domain among the plurality of models included in the AIAM.

For reference, the domain according to an embodiment may be data, a rule, a terminology, a problem definition, and/or a process used to perform a task specified by a predetermined AI system.

As an embodiment, the RT performs data analysis based on a feature of predetermined input data (for example, a user input and/or specific sensing data) and/or a request task, understands a data processing feature optimized to the corresponding task based thereon, and detects a predetermined model which implements the same to decide the domain-specific specialized model.

In other words, the RT according to an embodiment may be an artificial intelligence module configured to detect a model which may most effectively perform data processing according to a given domain, and allocate or distribute a corresponding task processing task.

In this connection, the RT according to an embodiment may include a RT pre-trained according to a described predetermined algorithm, a RT additionally trained according to an embodiment, and/or a RT newly trained by a new scheme. A detailed description thereof is provided in [MoE Model Providing Method] below.

In addition, the RT according to an embodiment may further perform additional functional operations described in the [MoE Model Providing Method] below.

The OCT according to an embodiment of the present invention may be an artificial intelligence module configured to control and manage an overall configuration of the AIAM.

In detail, in an embodiment, the OCT may allocate various tasks generated in an entire system to an appropriate resource (in an embodiment, the RT and/or a predetermined model).

Further, the OCT may manage resources such as a usable model and a hardware resource (for example, a CPU and/or a GPU) to be efficiently used.

Further, the OCT monitors a performance of the entire system to adjust a specific parameter as necessary or optimize a network configuration.

Further, the OCT may manage interlocking between a plurality of RTs and/or models, and control a data flow and processing process.

In other words, in an embodiment, the OCT may perform control and management of the entire system of the AIAM, and perform a role of a main RT which controls at least one RT.

In this connection, the OCT and the RT according to an embodiment closely interlock with each other to support an efficient operation of an MoE system.

Specifically, the OCT as a manager of the entire system may monitor the performance of the RT, and adjust a strategy of the RT as necessary.

The RT may implement efficient system control by substantially performing the allocation of the data processing task according to an instruction and/or a self-algorithm of the OCT.

In an embodiment, the OCT and/or the RT described above may be a master model P which may control and manage other components of the AIAM or the entire system (for example, the sLLM, the NM, the EM, and/or the SM).

The sLLM according to an embodiment of the present invention may be an artificial intelligence module implemented as a lightweight version of the LLM.

In other words, the sLLM may be an artificial intelligence module constructed to implement similar performance to a large model such as the LLM with a smaller number of resources.

In an embodiment, the sLLM may include an MoE model (in an embodiment, MoELM) based on a combination of a plurality of SMs and RTs according to an embodiment of the present invention described in the [MoE Model Providing Method] below. Moreover, the sLLM may include the MoE model (in an embodiment, a DMoE model) based on the domain-specific specialized model according to an embodiment of the present invention described in the [MOE-Based Model Specifying Method] below. A detailed description thereof is provided in [MoE Model Providing Method] and [MoE-Based Model Specifying Method] below.

Further, the NM according to an embodiment of the present invention may mean a predetermined MoE model implemented according to a described universal scheme.

For example, the NM may include a switch transformer, conditional computation in neural networks, sparse mixture of experts, and/or megatron-LM.

Further, the EM according to an embodiment of the present invention may be a predetermined artificial intelligence model implemented according to various described algorithms.

For example, the EM may include ChatGPT, Gemini, and/or Llama.

In an embodiment, the EM may be selectively used as necessary, and may support the processing of a given task.

Further, the SM according to an embodiment of the present invention may mean an artificial intelligence model in which optimization learning is performed for a specific purpose.

In other words, the SM may be an artificial intelligence model trained according to training data and a training scheme specialized to achieve a predetermined task.

In an embodiment, the SM may include a predetermined sLLM (such as MoELM and/or DMoE model), the NM, and/or the EM which is/are trained. Moreover, the SM may include a specialized module model according to an embodiment of the present invention described in the [MoE-Based Model Specifying Method] to be described later. A detailed description thereof will be described in the [MoE-Based Model Specifying Method] below.

In an embodiment, the sLLM, NM, EM, and/or SM described above may be a secondary model S which may perform a specific task according to control and management of the master model P (in other words, the OCT and/or the RT) of the AI agent model.

### [MoE Model Providing Method]

Hereinafter, a method for implementing a model provision service based on the MoE architecture that provides the MoE model based on a plurality of independently trained SMs by the computing system 1000 according to an embodiment of the present invention will be described in detail with reference to the accompanying drawings.

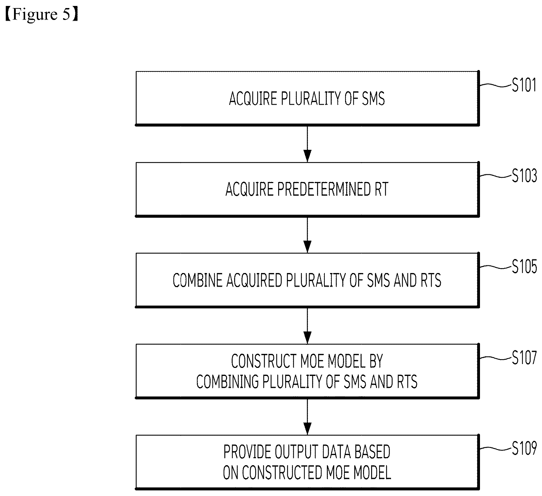

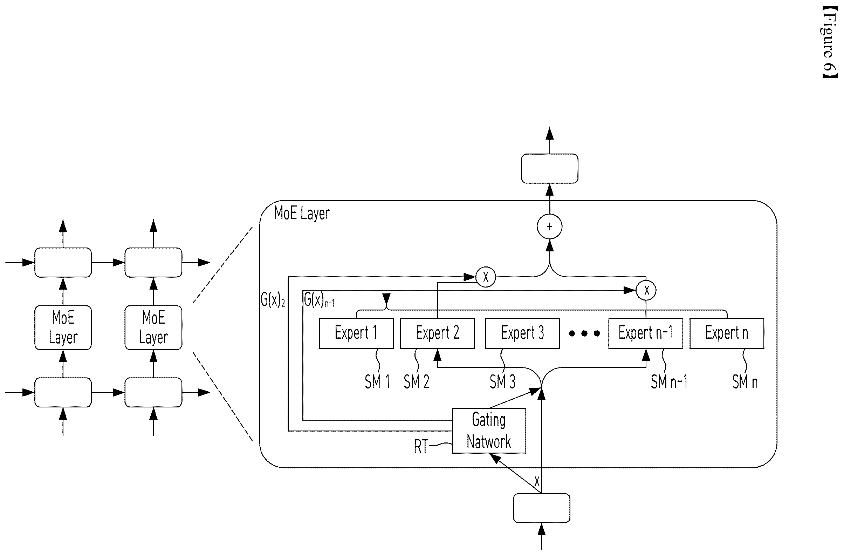

FIG. 5 illustrates a flow diagram of an MoE model providing method according to an embodiment of the present invention. FIG. 6 illustrates a conceptual diagram of an MoE model providing method according to an embodiment of the present invention.

Referring to FIGS. 5 and 6, the method for implementing the model provision service based on the MoE architecture that provides the MoE model implemented based on a plurality of pre-trained SMs by the computing system 1000 according to an embodiment of the present invention may include: acquiring a plurality of SMs (S101); acquiring a predetermined RT (S103); combining the acquired plurality of SMs and RTs (S105); constructing an MoE model by combining the plurality of SMs and RTs (S107); and providing output data based on the constructed MoE model (S109).

Specifically, the computing system 1000 according to an embodiment of the present invention may acquire the plurality of SMs (S101).

Herein, in other words, the SM according to an embodiment is an artificial intelligence model that has undergone optimization learning for a specific purpose, and may refer to an artificial intelligence model that has been trained using training data and methods specialized for the relevant purpose.

In an embodiment, the SM may include a predetermined trained sLLM (including MoELM and/or DMoE models), the NM, the EM, and/or the specialized module model according to an embodiment of the present invention described in [MoE-Based Model Specifying Method] described below.

In detail, in an embodiment, the computing system 1000 may acquire the plurality of SMs as above based on user input and/or interlocking with external servers.

In addition, the computing system 1000 according to an embodiment of the present invention may acquire a predetermined RT (S103).

Herein, in other words, the RT according to an embodiment may be an artificial intelligence module that performs task allocation and/or traffic adjustment for a plurality of models in the MoE architecture.

In detail, in an embodiment, the computing system 1000 may acquire at least one RT based on user input and/or interlocking with external servers.

In this connection, the RT may include a RT pre-trained according to a described predetermined algorithm, a RT additionally trained according to an embodiment to be described later, and/or a RT newly trained by a new scheme.

In addition, the computing system 1000 according to an embodiment of the present invention may combine the acquired plurality of SMs and RTs (S105).

In other words, in an embodiment, the computing system 1000 may mutually combine a plurality of independently trained SMs and RTs.

In detail, in an embodiment, the computing system 1000 may add the RT to the plurality of SMs and construct one model (hereinafter, MoELM) that operates like the MoE architecture of FIG. 6.

In other words, the computing system 1000 may configure a third MoE utilizing a modularized SM.

In this connection, in an embodiment, the computing system 1000 may detect an input data type for each of the plurality of SMs.

In addition, the computing system 1000 may perform different types of combining processes depending on whether the detected input data types are identical.

More specifically, in an embodiment, the computing system 1000 may combine the plurality of SMs and RTs by utilizing existing RTs when the input data types of the plurality of SMs are identical.

Specifically, in an embodiment, the computing system 1000 may combine the plurality of SMs and RTs by integrating the weight values of the existing RTs for each SM through a predetermined computation.

In an embodiment, the computing system 1000 may combine the plurality of SMs and RTs by using methods such as simple summation, sampling and summation, and/or summation according to a specific formula set by a user of the weight values of the existing RTs for each SM.

Thus, the computing system 1000 may combine the plurality of independently trained SMs and RTs into one, without requiring separate additional training.

In an embodiment, when the input data types of the plurality of SMs differ, the computing system 1000 may combine the plurality of SMs and RTs by additionally training the existing RT.

Hereinafter, for efficient explanation, the plurality of SMs will be limited to a first SM and a second SM, without limited thereto.

In detail, in an embodiment, the computing system 1000 may train the RT to expand the input data types of the first SM and the second SM.

More specifically, the computing system 1000 may integrate the original form of the input data of the first SM and the original form of the input data of the second SM using a predetermined computation at the time of preservation.

In addition, the computing system 1000 may train the RT to use the input data type based on the integrated input data as the input data type of the first SM and the second SM.

In other words, the computing system 1000 may perform additional training on the RT to expand the input data types of the first SM and the second SM and perform learning and operation based thereon.

In another embodiment, the computing system 1000 may train the RT to change the input data types of the first SM and the second SM.

In detail, the computing system 1000 may transform the input data of the first SM into the input data type of the second SM by transforming the same into a weight value.

In addition, the computing system 1000 may then train the RT to use the transformed data values to train and operate the second SM.

In the same manner, the computing system 1000 may train the RT to train and operate the first SM by transforming the input data of the second SM into the input data type of the first SM and then using the same.

In other words, the computing system 1000 may perform additional training on the RT to change the input data types of the first SM and the second SM and perform learning and operation accordingly.

As such, in an embodiment, the computing system 1000 may combine the plurality of SMs and RTs with additional training to address differences in input data types between the SMs, thereby preventing errors and constructing a combined model (in other words, MoELM) that performs smoother learning and operation.

In an embodiment, the computing system 1000 may combine the plurality of SMs and RTs by retraining the existing RT in a new way.

Specifically, in an embodiment, the computing system 1000 may perform RT learning to determine which input data to forward to which SM based on input data and/or available resources.

In this connection, the computing system 1000 may also perform the RT learning to determine whether to forward all or only a portion of the input data.

Furthermore, in an embodiment, the computing system 1000 may perform the RT learning to determine how many SMs to activate based on input data and/or available resources.

Furthermore, in an embodiment, the computing system 1000 may perform the RT learning to determine the quality of output data and, based thereon, determine which input data to forward to which the SM.

Furthermore, in an embodiment, the computing system 1000 may perform the RT learning to determine data processing speed and/or performance and, based thereon, determine which input data to forward to which the SM.

In addition, in an embodiment, the computing system 1000 may perform the RT learning, which determines the quality of data processing based on initial settings and, based thereon, determines which input data to forward to which the SM.

In addition, in an embodiment, the computing system 1000 may perform the RT learning, which determines which input data to forward to which the SM based on target performance and data processing speed according to user input.

In addition, in an embodiment, the computing system 1000 may perform the RT learning, which allows the RT to independently determine the optimal SM based on user feedback, reinforcement learning, LLM-based self-feedback, RLHF, and/or RLAIF, and then forward the input data to the corresponding SM.

In addition, referring further to FIG. 4, depending on embodiments, the computing system 1000 may further include an artificial intelligence module (hereinafter, referred to as an MoE automatic setting module (ASM)) that learns a predetermined existing MoE architecture and automatically sets a new MoE based thereon.

In addition, the computing system 1000 may use the aforementioned MoE ASM to set learning and operations for the RT.

In this connection, the MoE ASM may not perform any additional operations after completing the settings for the RT.

In addition, depending on embodiments, the computing system 1000 may perform the RT learning that implements the functional operations of the aforementioned MoE ASM.

As such, in an embodiment, the computing system 1000 may execute a variety of new RT learning processes to smoothly combine the plurality of SMs and RTs.

Accordingly, the computing system 1000 may more reliably guarantee the performance and quality of the combined model (in other words, MoELM).

In addition, the computing system 1000 according to an embodiment of the present invention may construct the MoE model by combining the plurality of SMs and RTs (S107).

In other words, in an embodiment, the computing system 1000 may construct one model (in other words, MoELM) that operates like the MoE architecture by combining the plurality of SMs and RTs, as described above.

In this connection, depending on embodiments, the MoELM may be included in the sLLM according to an embodiment of the present invention

In other words, the sLLM according to an embodiment may include an MoELM constructed according to an embodiment of the present invention.

In addition, the computing system 1000 according to an embodiment of the present invention may provide output data based on the constructed MoE model (S109).

In other words, in an embodiment, the computing system 1000 may use the MoELM constructed as described above to provide output data (for example, response data to a specific query and/or a control signal according to a specific instruction) in response to predetermined input data (for example, text, voice, image, moving picture, and/or specific sensor based sensing data).

As described above, in an embodiment, the computing system 1000 may combine separately trained SMs with the RT, operate the same like the MoE architecture, and provide output data accordingly.

In other words, the computing system 1000 may use a combined model (in other words, MoELM) constructed into an MoE format by collecting independently trained single models, generating and providing output data based on task processing based on predetermined input data.

Thus, in an embodiment, unlike existing MoE methods that operate while maintaining a large-sized overall model, the computing system 1000 may implement an MoE mechanism that utilizes small-sized models optimized for a given task, enabling highly efficient data processing without wasting unnecessary resources.

Thus, the computing system 1000 may support various services using an improved MoE model that maintains the advantages of the conventional MoE method (for example, faster prelearning speed compared to FFN, faster inference speed compared to models of the same size, and/or improved instruction tuning performance) while minimizing the disadvantages of the conventional MoE method (for example, the need for a high level of VRAM and/or various challenges in a fine tuning process), and thus may directly improve the performance and quality of the corresponding service.

### [MoE Based Model Specifying Method]

Hereinafter, a method in which the computing system 1000 according to an embodiment of the present invention implements the MoE architecture based model providing service which implements modularization for a predetermined SM within the MoE model will be described in detail with reference to the accompanying drawings.

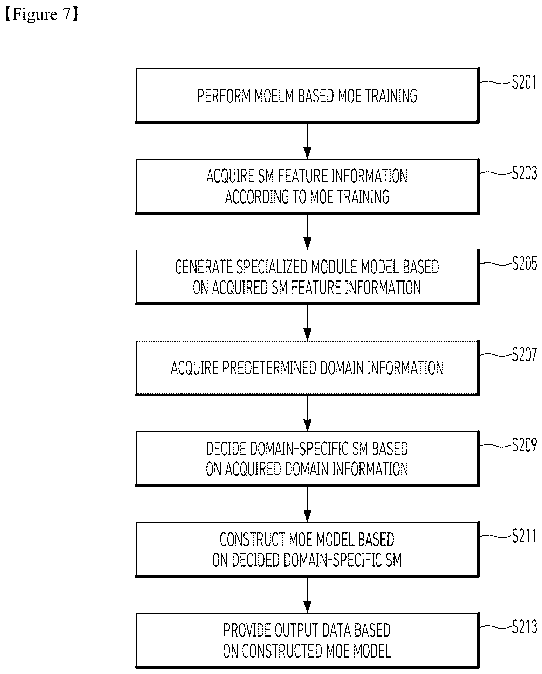

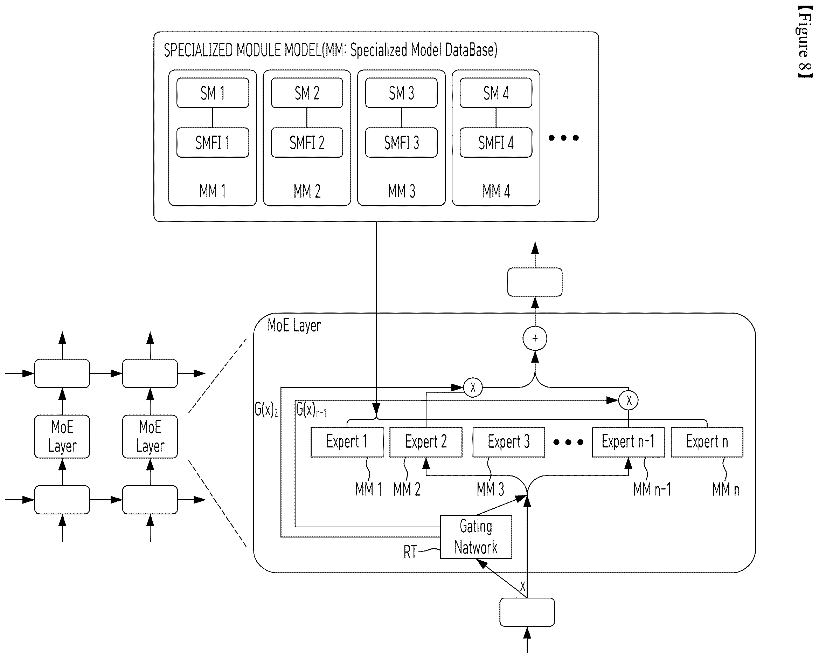

FIG. 7 illustrates a flow diagram of a model specifying method based on an MoE according to an embodiment of the present invention. FIG. 8 illustrates a conceptual diagram of a model specifying method based on an MoE according to an embodiment of the present invention.

Referring to FIGS. 7 and 8, the method in which the computing system 1000 according to an embodiment of the present invention implements the MoE architecture based model providing service which implements modularization for the SM within the MoE model may include: performing MoELM based MoE training (S201); acquiring SM feature information according to the MoE training (S203); generating a specialized module model based on the acquired SM feature information (S205); acquiring predetermined domain information (S207); deciding a domain-specific SM based on the acquired domain information (S209); constructing an MoE model based on the decided domain-specific SM (S211); and providing output data based on the constructed MoE model (S213).

Specifically, in the case of a normalized pre-trained SM, there are multiple cases in which it is difficult to distinguish or understand which model is specialized to a specific domain.

As a result, there may be a predetermined limit in selecting and utilizing the SM most optimized to a specific task.

In order to resolve the limit, in an embodiment of the present invention, the computing system 1000 may perform the following process of specifying and modularizing a role and/or function of each SM, and effectively selecting and utilizing a customized SM optimized to a specific domain based thereon.

In detail, the computing system 1000 according to an embodiment of the present invention may perform the MoELM based MoE training (S301).

In other words, in an embodiment, the computing system 1000 may perform the MoE training based on the MoELM constructed based on the [MoE Model Providing Method] described above.

In this connection, as the training is performed, the computing system 1000 may train each of the plurality of SMs included in the MoELM.

In other words, as such training is performed, each of the plurality of SMs in the MoELM may be trained.

Herein, in other words, the SM according to an embodiment is an artificial intelligence model in which optimization learning for a specific purpose, and may mean an artificial intelligence trained according to training data and a training scheme specialized to a corresponding purpose.

In an embodiment, the SM may include a predetermined sLLM (such as MoELM and/or DMoE model), the NM, the EM and/or a specialized module model (MM) according to an embodiment of the present invention described below.

In addition, the computing system 1000 according to an embodiment of the present invention may acquire the specialized model feature information (SMFI) according to the MoE training (S203).

Herein, the SMFI according to an embodiment may mean information specifying a role and/or a function of a predetermined SM.

In detail, referring further to FIG. 4, in an embodiment, the computing system 1000 may further include a model specialization module (MSM) according to an embodiment of the present invention.

In addition, the computing system 1000 may acquire the aforementioned SMFI by interlocking with the MSM.

Herein, the MSM according to an embodiment of the present invention may be an artificial intelligence module that generates and outputs the SMFI corresponding to a predetermined SM based on the MoE training.

Specifically, in an embodiment, the MSM may monitor and track a task allocation state of the RT to each SM when the aforementioned MoE training is performed.

In other words, in an embodiment, the MSM may understand which task the RT distributes and allocates to which SM as the MoELM learns and operates.

Depending on embodiments, the MSM may generate, match, and manage a tag specifying each task allocation state for each tracked task allocation state.

Thus, in an embodiment, the MSM may determine a specialty for each of the plurality of SMs.

Further, in an embodiment, the MSM may generate the SMFI corresponding to each SM based on the determined specialty for each SM.

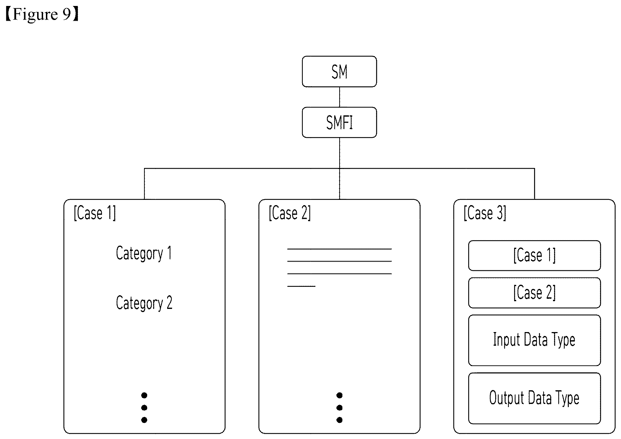

FIG. 9 illustrates an example of specialized model feature information (SMFI) according to an embodiment of the present invention.

In this connection, referring to FIG. 9, as an embodiment, the MSM may generate the aforementioned SMFI in at least one case of the following cases.
[Case 1] The SMFI of a form of selecting one category among predetermined SM role and/or function specifying category (for example, query and response or device control) according to a user input
[Case 2] The SMFI of a form of specifying a role and/or a function of the SM in a natural language form
[Case 3] The SMFI of a form of specifying the role and/or the function of the SM in at least one case of case 1 or case 2, and further defining input data and output data of the corresponding SM

In addition, in an embodiment, the MSM may provide the generated SMFI to the computing system 1000 as the output data.

Accordingly, in an embodiment, the computing system 1000 may acquire feature information for each SM by interlocking with the MSM.

Further, the computing system 1000 according to an embodiment of the present invention may generate the specialized MM based on the acquired SMFI (S205).

For example, the specialized MM according to an embodiment of the present invention may be the SM independently separated while matching predetermined SMFI.

In detail, in an embodiment, the computing system 1000 may match the SMFI acquired as described above with the corresponding SM.

Further, in an embodiment, the computing system 1000 may independently separate the SM matched with the SMFI, and make the separated SM into a database.

In other words, in an embodiment, the computing system 1000 may perform the modularization of matching the relevant SMFI to the respective SM, and separately distinguish, store, and manage the matched SMFI.

Accordingly, the computing system 1000 may generate the specialized MM which is the SM independently separated while matching with the SMFI.

As described above, in an embodiment, the computing system 1000 may understand a feature for each SM within a given MoE model (in an embodiment, MoELM), and reflect the same, and modularize each SM into a small size at a level to be reused and sharable.

As a result, the computing system 1000 may sort and select the SM which implements a data processing process optimized to a specific domain rapidly and efficiently with higher accuracy, and easily support flexible scalability and reduction of the MoE model based thereon.

Further, the computing system 1000 according to an embodiment of the present invention may acquire predetermined domain information (S207).

For example, the domain information according to an embodiment may be information defining a domain which specifies data, a rule, a terminology, a problem definition, and/or a process used to perform a predetermined task specified by a predetermined AI system.

In detail, in an embodiment, the computing system 1000 may acquire predetermined input data (for example, text, voice, image, moving picture, and/or specific sensor based sensing data).

Further, in an embodiment, the computing system 1000 may determine a domain corresponding to the acquired input data.

In this connection, in an embodiment, a method in which the computing system 1000 determines the domain for the input data may be performed based on various described algorithms which are capable of performing the method, but in an embodiment of the present invention, a corresponding algorithm itself is not limited or restricted.

Accordingly, the system 1000 according to an embodiment may acquire domain information for a task to be processed.

Further, the computing system 1000 according to an embodiment of the present invention may determine a domain-specific specialized model based on the acquired domain information (S309).

Herein, the domain-specific specialized model according to an embodiment may be the SM that executes a data processing (in an embodiment, deep learning) optimized to a predetermined domain.

In detail, referring further to FIG. 8, in an embodiment, the computing system 1000 may determine at least one domain-specific specialized model based on the domain information and the SMFI acquired as described above.

More specifically, in an embodiment, the computing system 1000 may detect at least one SMFI having a feature corresponding to the acquired domain information.

For example, when identifying "a feature of a task which outputs response data to predetermined query data" based on the first domain information, the computing system 1000 may detect at least one SMFI specified as "a role and/or a function specialized to a query and a response" among the plurality of SMFIs stored in the database.

In this connection, depending on embodiments, the computing system 1000 may detect at least one SMFI corresponding to the domain information based on a plurality of tags generated by the MSM for each task allocation state of the RT for the plurality of SMs upon the aforementioned MoE architecture based training.

In other words, depending on embodiments, the computing system 1000 compares the plurality of tags generated as above and the domain information with each other to detect at least one SMFI corresponding to the corresponding domain information.

In this connection, depending on embodiments, the computing system 1000 may filter a comparison target tag according to a generation time of each tag.

Specifically, the computing system 1000 may set, as the comparison target tag, at least one tag generated at a specific task allocation time according to a user input and/or a predetermined self process.

For example, the computing system 1000 may set, as the comparison target tag, at least one tag generated for a task allocation state performed after a predetermined time during an entire training time by considering that task allocation accuracy is enhanced as a training rate becomes higher.

Accordingly, the computing system 1000 compares at least one filtered tag and the domain information, which guarantees higher accuracy to detect at least one SMFI corresponding to the domain information.

Further, in an embodiment, the computing system 1000 may extract the SM (for example, the specialized MM) matched with each of detected SMFI.

In addition, in an embodiment, the computing system 1000 may determine at least one extracted specialized MM as the domain-specific specialized model.

Further, the computing system 1000 according to an embodiment of the present invention may construct an MoE model based on the decided domain-specific specialized model (S211).

Referring further to FIG. 8, in an embodiment, the computing system 1000 may construct one model (hereinafter, referred to as the DMoE model) which operates like the MoE architecture based on at least one domain-specific specialized model decided as described above.

In other words, the computing system 1000 may construct the MoE model (for example, the DMoE model) which implements data processing optimized to a specific domain by using at least some models (for example, a domain-specific specialized model) among the plurality of SMs modularized with a small size.

In detail, in an embodiment, the computing system 1000 combines at least one domain-specific specialized model and a predetermined RT to construct the aforementioned DMoE model.

In this connection, in an embodiment, a specific method of constructing the DMoE model by combining the domain-specific specialized model and the RT in the computing system 1000 may be applied to the description of the method of constructing the MoELM by combining the plurality of SMs and RTs described in the aforementioned [MoE Model Providing Method].

Hence, in an embodiment, the computing system 1000 may construct the DMoE model including the domain-specific specialized model and the RT.

In this connection, in an embodiment, the DMoE model may be included in the sLLM according to an embodiment of the present invention.

In other words, the sLLM according to an embodiment may include the DMoE model constructed according to an embodiment of the present invention.

Further, the computing system 1000 according to an embodiment of the present invention may provide output data based on the constructed MoE model (S213).

In other words, in an embodiment, the AI agent specialization model (AIAM) may provide output data (for example, response data to a specific query and/or a control signal according to a specific instruction) for predetermined input data (for example, text, voice, image, moving picture, and/or specific sensor based sensing data) by using the DMoE model constructed as described above.

As described above, in an embodiment, the computing system 1000 may specify a role and/or a function of each SM and at the same time, separate and modularize each specified role and/or function to a level to be reusable and sharable, and construct a customized MoE model (for example, the DMoE model) optimized to a specific domain rapidly and flexibly by utilizing the role and/or function, and provide predetermined output data according to efficient task processing using the constructed model.

Accordingly, in an embodiment, the computing system 1000 may implement and provide the MoE model having further enhanced data processing (and/or computation) speed and inference performance, and support various services through the MoE model to effectively achieve performance and quality enhancement.

### [MoE Application LLM Based AI Agent Providing Method]

Hereinafter, a method in which the computing system 1000 according to an embodiment of the present invention decides an application model optimized to a domain according to an external environment based on the LLM which applies the MoE, and implements the MoE architecture based model providing service which provides an on-device specialized AI agent performing an output based on the decided application model will be described in detail with reference to the accompanying drawings.

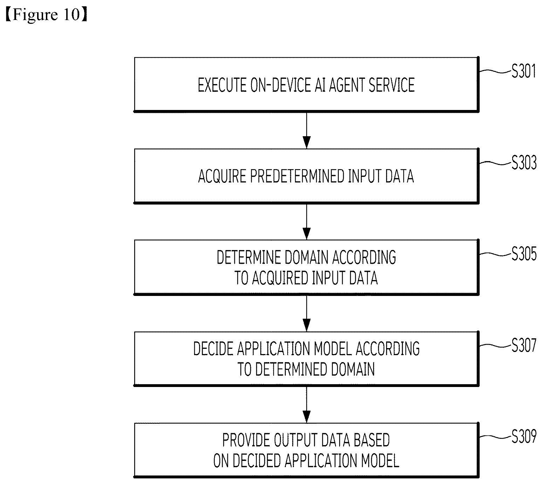

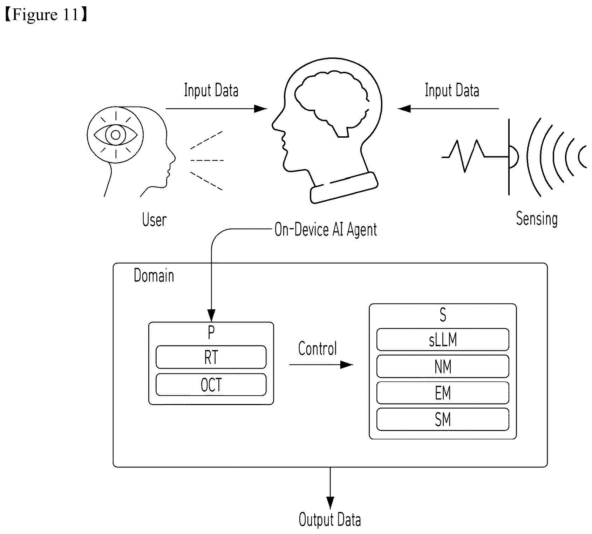

FIG. 10 illustrates a flow diagram of a method for providing an AI agent based on an LLM applying an MoE according to an embodiment of the present invention. FIG. 11 illustrates a conceptual diagram of a method for providing an AI agent based on an LLM applying an MoE according to an embodiment of the present invention.

Referring to FIGS. 10 and 11, a method in which the computing system 1000 according to an embodiment of the present invention decides the application model optimized to the domain according to the external environment based on the LLM which applies the MoE, and implements the MoE architecture based model providing service which provides the on-device specialized AIAM performing the output based on the decided application model may include: executing an on-device AI agent service (S301); acquiring predetermined input data (S303); determining a domain according to the acquired input data (S305); deciding an application model according to the determined domain (S307); and providing output data based on the decided application model (S309).

Specifically, the computing system 1000 according to an embodiment of the present invention may execute the on-device AI agent service (S301).

Herein, for reference, the on-device AI may be a technology that directly performs AI based data processing in a device of a user other than a cloud and/or an external server. Since the on-device AI performs or completes all processing in the device without sending data to the outside of the device of the user, the on-device AI may provide advantages such as personal information protection, real-time processing, and reduction in dependence on Internet connections.

Accordingly, in this regard, the on-device AI agent service may be various services implemented by utilizing the on-device AI.

For example, the on-device AI agent service may include smart phone's voice assistant services (for example, Google Assistant, Apple Siri, or Samsung Bixby), smart camera services (for example, HDR+ of Google Pixel, or Deep Fusion of Apple), fitness tracker and smartwatch services (for example, Apple Watch, or Fitbit), autonomous driving services (for example, Autopilot of Tesla), and/or home security services (for example, Nest Secure, or Ring).

In an embodiment, the computing system 1000 may execute a predetermined on-device AI agent service based on interlocking with the AIAM according to an embodiment of the present invention and/or a predetermined application.

Further, the computing system 1000 according to an embodiment of the present invention may acquire predetermined input data (S303).

In detail, in an embodiment, the computing system 1000 may acquire at least one input data (for example, predetermined text, voice, image, moving picture, and/or sensing data) based on interlocking with a user input and/or an external device (for example, a predetermined sensor) based on the on-device AI agent service executed as described above.

In an embodiment, the input data acquired as described above may include predetermined data which may specify a target task of data processing.

Further, the computing system 1000 according to an embodiment of the present invention may determine a domain according to the acquired input data (S305).

Herein, in other words, the domain according to an embodiment may mean data, rule, terminology, problem definition, and/or process used to perform a task specified by a predetermined AI system.

In detail, in an embodiment, the computing system 1000 may determine a domain corresponding to the acquired input data.

In this connection, in an embodiment, a method in which the computing system 1000 determines the domain for the input data may be performed based on various described algorithms which are capable of performing the method, but in an embodiment of the present invention, a corresponding algorithm itself is not limited or restricted.

Accordingly, in an embodiment, the computing system 1000 may acquire domain information for a task to be processed.

Further, the computing system 1000 according to an embodiment of the present invention may decide an application model according to the determined domain (S307).

Herein, the application model according to an embodiment may be a model which performs predetermined task processing according to given input data.

In an embodiment, the application model may be at least one model of secondary models S described above.

In this connection, in other words, the secondary model (S) according to an embodiment may mean a model which may perform a specific task according to control and management of the master model (P) (for example, the OCT and/or the RT) which is in charge of control and management of a predetermined AI system operation.

In an embodiment, the secondary model S may include one or more of the sLLM (including the MoELM and/or DMoE model), the NM, the EM, and/or the SM (including the specialized MM).

In detail, in an embodiment, the computing system 1000 may decide at least one application model based on the domain information acquired as described above.

In more detail, as an embodiment, the computing system 1000 may detect at least one model (for example, a domain-specific specialized model) which executes a data processing operation (in an embodiment, deep learning) optimized to given domain information among the secondary models S described above by interlocking with the master model P (in other words, the OCT and/or the RT) according to an embodiment of the present invention.

In this connection, in an embodiment of the present invention, a specific method in which the computing system 1000 detects the domain-specific specialized model by interlocking with the master model P is omitted by applying the description of the RT and the OCT described in the "[AI Agent Specialization Model (AIAM)]" described above.

Further, in an embodiment, the computing system 1000 may decide at least one detected domain-specific specialized model as the application model.

Further, the computing system 1000 according to an embodiment of the present invention may provide output data based on the decided application model (S309).

In other words, in an embodiment, the computing system 1000 may generate and provide output data (for example, response data to a specific query and/or a control signal according to a specific instruction) for predetermined input data (for example, text, voice, image, moving picture, and/or specific sensor based sensing data) based on at least one application model decided through the AIAM as described above.

In other words, the computing system 1000 may perform a predetermined request task based on given input data by using the application model decided as described above, and provide output data according to the performed data processing.

In this connection, in an embodiment, the computing system 1000 may provide the output data based on the on-device AI agent service described above.

As described above, in an embodiment, the computing system 1000 may effectively decide a model optimized to data processing according to a given domain even in an on-device environment based on the AIAM including the models (in an embodiment, the MoELM, the DMoE model, and/or the specialized MM) implemented by applying the MoE architecture, and provide an output according to efficient data processing through the decided model according to an embodiment of the present invention.

In other words, the computing system 1000 may implement and provide an artificial intelligence model (for example, the AIAM) that better understands, better executes, and well answers a given task even in any environment.

Accordingly, in an embodiment, the computing system 1000 may enhance qualities and performances of various AI agent based services (for example, smart phone's voice assistant services, smart camera services, fitness tracker and smartwatch services, autonomous driving services, and/or home security services).

The embodiments of the present invention described above may be implemented in the form of program commands which may be executed through various types of computer constituting elements and recorded in a computer-readable recording medium. The computer-readable recording medium may include program commands, data files, and data structures separately or in combination thereof. The program commands recorded in the computer-readable recording medium may be those designed and configured specifically for the present invention or may be those commonly available for those skilled in the field of computer software. Examples of a computer-readable recoding medium may include magnetic media such as hard-disks, floppy disks, and magnetic tapes; optical media such as CD-ROMs and DVDs; and hardware devices specially designed to store and execute program commands such as ROM, RAM, and flash memory. Examples of program commands include not only machine codes such as those generated by a compiler but also high-level language codes which may be executed by a computer through an interpreter and the like. The hardware device may be replaced with by one or more software modules to perform the operations of the present invention, and vice versa.

Specific executions described in the present invention are exemplary embodiments and the scope of the present invention is not limited even by any method. For brevity of the specification, descriptions of conventional electronic configurations, control systems, software, and other functional aspects of the systems may be omitted. Further, connection or connection members of lines among components exemplarily represent functions connections and/or physical or circuitry connections and may be represented as various functional connections, physical connections, or circuitry connections which are replaceable or added in an actual device. Further, unless otherwise specified, such as "essential" or "important," the connections may not be components particularly required for application of the present invention.

Further, in the detailed description of the present invention, which is described, while the present invention has been described with respect to the preferred embodiments, it will be understood by those skilled in the art or those skilled in the art having ordinary knowledge in the technical field that various changes and modifications of the present invention may be made without departing from the spirit and the technical scope of the invention described in the following claims. Accordingly, the technical scope of the present invention should not be limited to the contents described in the detailed description of the present invention but should be defined by the claims.

### [Industrial Applicability]

An embodiment of the present invention relates to a method and system for providing an AI agent based on an LLM applying an artificial intelligence model including a plurality of models, and is applicable to the artificial intelligence industry, and thus has industrial applicability.

## Claims

1. A method for a computing system comprising a memory and a processor to provide an AI agent based on an LLM applying an artificial intelligence model comprising a plurality of models, the method comprising:
executing an on-device AI agent service;
acquiring predetermined input data based on the executed on-device AI agent service;
determining a domain according to the acquired input data;
deciding an application model, which is an artificial intelligence model that will process a task according to the determined domain;
generating output data for the input data based on the decided application model; and
providing the generated output data based on the on-device AI agent service.

2. The method of claim 1, wherein the input data specifies the task according to the domain in the form of at least one of predetermined text, voice, image, video, or sensing data.

3. The method of claim 1, wherein the domain specifies at least one feature of data, a rule, a terminology, a problem definition, or a process for a predetermined task.

4. The method of claim 1, wherein the decision of the application model comprises deciding at least one application model based on a master model that controls the operation of an on-device AI agent service system.

5. The method of claim 4, wherein the master model comprises at least one of a router (gating network), which is an artificial intelligence module that performs task allocation for each artificial intelligence model included in the on-device AI agent service system based on the decided domain, or an orchestrator, which is an artificial intelligence module that controls the router.

6. The method of claim 5, wherein the decision of the application model further comprises deciding the application model based on a secondary model, which is an artificial intelligence module that performs a predetermined task under the control of the master model.

7. The method of claim 6, wherein the secondary model comprises at least one of a small large language model (sLLM), normal mixture of experts (MoE) model, external model, or specialized model.

8. The method of claim 7, wherein the sLLM comprises an MoELM, which is a model based on an MoE architecture, constructed by combining the specialized model, which is an independently pre-trained artificial intelligence model, and the router, which is an artificial intelligence module that controls a model task.

9. The method of claim 7, wherein the specialized model comprises an specialized module model, which is an independently modularized specialized model, matched with specialized model feature information acquired based on predetermined MoE architecture-based learning.

10. The method of claim 9, wherein the sLLM comprises a DMoE model, which is a model based on an MoE architecture, constructed by combining the specialized module model and the router.

11. The method of claim 7, wherein the decision of the application model further comprises:
detecting the secondary model optimized for task processing according to the domain based on the master model; and
deciding the detected secondary model as the application model.

12. A system for providing an AI agent based on an LLM applying an artificial intelligence model comprising a plurality of models, the system comprising:
at least one memory; and
at least one processor for reading out at least one application stored in the memory and providing the AI agent based on the LLM applying the artificial intelligence model comprising the plurality of models,
wherein instructions of the processor comprise instructions for:
executing an on-device AI agent service;
acquiring predetermined input data based on the executed on-device AI agent service;
determining a domain according to the acquired input data;
deciding an application model, which is an artificial intelligence model that will process a task according to the determined domain;
generating output data for the input data based on the decided application model; and
providing the generated output data based on the on-device AI agent service.
